# EUROPÄISCHE PATENTSCHRIFT

(11) **EP 3 072 421 B1**
(45) Veröffentlichungstag und Bekanntmachung des Hinweises auf die Patenterteilung: **24.03.2021**
(21) Anmeldenummer: 16000013.9
(22) Anmeldetag: 04.01.2016
(51) Int. Cl.: A47G 25/14, B65G 9/00, A47G 25/48, D06F 95/00

(54) **VERFAHREN ZUM BETÄTIGEN EINER TRANSPORTKLAMMER SOWIE TRANSPORTEINRICHTUNG FÜR EIN KLEMMORGAN AUFWEISENDE TRANSPORTKLAMMERN**
METHOD FOR OPERATING A TRANSPORT CLIP AND TRANSPORT DEVICE FOR TRANSPORT CLIPS HAVING A CLAMPING MEANS
PROCEDE DE FONCTIONNEMENT D'UNE CLIP DE TRANSPORT ET DISPOSITIF DE TRANSPORT POUR CLIPS DE TRANSPORT AYANT UN MOYEN DE SERRAGE

(30) Priorität: 14.01.2015 DE 102015000109
(43) Veröffentlichungstag der Anmeldung: 28.09.2016
(73) Patentinhaber: Herbert Kannegiesser GmbH, 32602 Vlotho (DE)
(72) Erfinder: Möcker, Jürgen, 32049 Herford (DE); Littmann, Dirk, 32108 Bad Salzuflen (DE)
(74) Vertreter: Möller, Friedrich

(56) Entgegenhaltungen:
- EP-A1- 0 738 798
- EP-A1- 1 544 136
- DE-U1-202008 007 100

## Beschreibung

Die Erfindung betrifft ein Verfahren zum Betätigen einer Transportklammer gemäß dem Oberbegriff des Anspruchs 1 sowie eine Transporteinrichtung gemäß dem Oberbegriff des Anspruchs 6.

Die hier angesprochene Transportklammer bzw. Transporteinrichtung, sowie das Verfahren finden vorwiegend im Wäschereibereich Anwendung. Mit den Transportklammern sind die zu behandelnden Wäschestücke, wie beispielsweise Bekleidungsstücke, Flachwäschestücke oder dergleichen, einzelnen Bearbeitungsstationen im Wäschereibereich zuführbar.

Für die vorstehend genannten Zwecke sind Transportklammern, sowie Transporteinrichtungen unterschiedlichster Bauform bekannt. Ein derartiges System ist beispielsweise in EP 1 544 136 A beschrieben. Transportklammern verfügen üblicher-weise über Klemmorgane zur Aufnahme eines Wäschestücks, sowie Haken- bzw. Befestigungsmittel, womit die Transportklammern mit der Transporteinrichtung zusammenwirken.

Für einen zuverlässigen und störungsunanfälligen Transport von Wäschestücken sind die Transportklammern üblicherweise einer Transportbahn bzw. einem Transportstrang der Transporteinrichtung fest zugeordnet, wie beispielsweise in EP 0 738 798 A1 dargestellt. Durch diese feste Zuordnung der Transportklammer zum Transportstrang oder der Transportschiene wird insbesondere ein flexibler Weitertransport des am Klemmorgan gehaltenen Wäschestücks zu folgenden Bearbeitungsstationen erschwert.

Die Aufgabe der vorliegenden Erfindung besteht nun darin, eine Transporteinrichtung sowie ein Verfahren zum Betätigen der Transportklammer zu schaffen, wodurch der Transport von Wäschestücken vereinfacht und eine einfachere Handhabung ermöglicht wird.

Ein Verfahren zur Lösung dieser Aufgabe weist die Maßnahmen des Anspruchs 1 auf. Demnach ist es erfindungsgemäß vorgesehen, dass die Transportklammern beim Öffnen und/oder Schließen, insbesondere ihres mindestens einen Klemmorgans, an mindestens einem stationären Gegenhalter abgestützt wird. Durch dieses Abstützen der Transportklammer beim Öffnen und/oder Schließen wird der Kraft entgegengewirkt, die ein Betätigungsmittel zum Öffnen und/oder Schließen der Transportklammer auf selbige ausübt. Durch dieses Abstützen verbleibt die Transportklammer in Ihrer Transportausrichtung relativ zu der Transporteinrichtung und wird nicht durch das Einwirken des Betätigungsmittels ausgelenkt. Die Transportklammer lässt sich dadurch effektiv öffnen bzw. schließen.

Insbesondere kann es die Erfindung weiter vorsehen, dass das Abstützen der Transportklammer nur in einer Station zum Öffnen und/oder Schließen des Klemmorgans erfolgt. Die Transportklammer wird somit nur dort abgestützt, wo es erforderlich ist, um die sonstige Transportbewegung nicht unnötig zu stören bzw. zu bremsen. Es ist außerdem denkbar, dass während des Abstützens der Transportklammer selbige relativ zur Transporteinrichtung still steht. Es ist jedoch gleichermaßen denkbar, dass die Transportklammer während des Abstützens und Öffnens und Schließens des Klemmorgans weiterbewegt wird, bzw. mit verminderter Geschwindigkeit weiterbewegt wird.

Die Ausgestaltungsmöglichkeit der vorliegenden Erfindung sieht es vor, dass zum Öffnen und/oder Schließen das Betätigungsmittel eines als Klemmhebel ausgebildeten Klemmorgans nach unten bzw. nach oben bewegt wird und dabei die Transportklammer durch mindestens einen Gegenhalter gegen ein seitliches Wegschwenken abgestützt wird, insbesondere quer zur Transportrichtung der Transportklammer abgestützt wird. Durch das Einwirken des Betätigungsmittels auf den Klemmhebel des Klemmorgans wird das Klemmorgan der Transportklammer geöffnet oder geschlossen. Das heißt, dass während des Öffnens bzw. Schließens eine Gegenkraft auf die Transportklammer ausgeübt wird. Um zu verhindern, dass diese Kraft neben dem Öffnen bzw. Schließen des Klemmorgans außerdem ein Auslenken der Transportklammer relativ zu der Transporteinrichtung bewirkt, ist der Transportklammer der Gegenhalter zugeordnet, der dieser auslenkenden Bewegung entgegenwirkt. Dieser Gegenhalter kann entweder einer festen Position bzw. Station zum Öffnen und/oder Schließen des Klemmorgans zugeordnet werden, oder alternativ für das Öffnen bzw. Schließen des Klemmorgans der Transportklammer temporär zugeordnet werden. Ein temporäres Zuordnen des Gegenhalters zu der Transportklammer, für den Fall, dass das Klemmorgan geöffnet bzw. geschlossen werden soll, hat den Vorteil, dass die Transportklammer bei ihrer Bewegung längs ihrer Transportstrecke nicht gestört wird, falls diese nicht geöffnet bzw. geschlossen werden soll.

Weiter kann es die Erfindung vorsehen, dass ein Wäschestück entgegen einer Vorspannkraft des Klemmhebels in ein Klammermaul des Klemmorgans bewegt wird und dabei die auslenkende Transportklammer durch den Gegenhalter gegen ein seitliches Wegschwenken abgestützt wird. Bei der Eingabe des Wäschestücks in das Klammermaul durch eine Bedienperson oder durch eine Übergabeklammer muss mindestens so viel Kraft aufgewendet werden, um der Vorspannkraft des Klemmhebels entgegen zu wirken. Da eine derartige Vorspannung eine bestimmte Schwellkraft aufweist, die zunächst überwunden werden muss damit sich der Klemmhebel öffnet, würde die Transportklammer aus Ihrer Position ausgelenkt. Um dies zu vermeiden, wird genau wie zuvor beschrieben, der Transportklammer ein Gegenhalter zugeordnet.

Die vorliegende Erfindung kann es weiter bevorzugt vorsehen, dass ein der Transportklammer zugeordneter Informationsträger berührungslos ausgelesen wird und in Abhängigkeit der ausgelesenen Informationen die Transportklammer geöffnet bzw. geschlossen wird. Ein derartiger Informationsträger, der beispielsweise als Strichcode, "RFID-Tag" oder sonstiger vorzugsweise elektronischer Datenträger ausgebildet sein kann, weist Informationen über die Eigenschaften bzw. über die Behandlungsmethoden für das an der Transportklammer hängende Wäschestück auf. Durch Auslesen dieser Daten wird die Transportklammer beispielsweise bei entsprechender Information geöffnet bzw. geschlossen. Gleichermaßen kann der Transportklammer bei entsprechender Information ein Gegenhalter zugeordnet werden. Durch die Zuordnung derartiger Informationsträger lässt sich jedes an einer Transportklammer hängende Wäschestück individuell behandeln und/oder einer für das Wäschestück vorgesehenen Bearbeitungsstation zugeführt werden. Der Informationsträger erhält die Informationen über das entsprechende Wäschestück bevorzugt vor der Aufnahme des entsprechenden Wäschestücks, bzw. direkt bei der Aufnahme des Wäschestücks.

Eine Transporteinrichtung zur Lösung der eingangs genannten Aufgabe weist die Merkmale des Anspruchs 6 auf. Demnach weist die Transporteinrichtung für Klemmorgane aufweisende Transportklammern eine ortsunveränderliche, schienenartige Transportbahn auf, auf welcher die Transportbügel mit den ihnen zugeordneten Haken aufhängbar sind, Stationen zum Öffnen und/oder Schließen von Klemmorganen der Transportbügel auf. Vorzugsweise sind die Stationen der Transportbahn zugeordnet. Dabei sind mindestens den Stationen zum Öffnen und/oder Schießen der Klemmorgane als stationäre Gegenhalter ausgebildete Anschläge zum Abstützen der Transportklammern zugeordnet. Die hier genannten Transportklammern weisen folgende Merkmale auf:
Demnach ist einem Klammerkörper der Transportklammer ein Haken zugeordnet, der zum Aufhängen auf einer festen Transportbahn, insbesondere einer stationären Schiene, einer Transporteinrichtung ausgebildet ist, und mit einem dem Klammerkörper zugeordneten Klemmorgan ausgestattet ist. Das Klemmorgan weist ein in dem Klammerkörper integriertes, an einer Unterseite des Klammerkörpers offenes Klammermaul und einem dem Klammermaul zugeordneten, schwenkbaren Klemmhebel auf, wobei der Klemmhebel einen bereichsweise aus dem Klammerkörper herausragenden Betätigungsvorsprung aufweist. Durch den aus dem Klammerkörper herausragenden Betätigungsvorsprung lässt sich die Transportklammer auf eine einfache Art und Weise durch ein Betätigungsmittel öffnen bzw. schließen. Durch Zusammenwirken des Klammermauls mit dem Klemmhebel sind Wäschestücke im Klemmorgan der Transportklammer auf eine einfache sowie zuverlässige Art und Weise eingeb- bzw. einhängbar. Das Klammermaul ist außerdem schräg gerichtet dem Klammerkörper zugeordnet. Dadurch kann das Wäschestück ergonomisch günstig in das Klammermaul eingeschoben werden.

Weiter kann es vorgesehen sein, dem Klemmhebel eine Klemmnase zuzuordnen, die in das Klammermaul hineinragt und zumindest zeitweise in Kontakt mit einer Innenfläche des Klammermauls steht. Vor der Aufnahme eines Wäschestücks berühren sich Klemmnase und Klammermaul. Zur Aufnahme eines Wäschestücks wird durch Betätigen des Betätigungsvorsprungs die Klemmnase des Klemmhebels entgegen einer Vorspannkraft verschwenkt und dadurch das Klammermaul geöffnet. Nachdem das Wäschestück dem Klammermaul zugeführt wurde, bewirkt die Vorspannkraft der Feder, dass die Klemmnase des Klemmhebels wieder zurückschwenkt und dabei das Wäschestück zwischen Klemmnase und Innenfläche des Klammermauls eingeklemmt wird.

Insbesondere kann es weiter vorsehen, dass der Klemmhebel um eine Schwenkachse, die vorzugsweise parallel zur Transportbahn ausgerichtet ist, schwenkbar am Klammerkörper gelagert ist und vorzugsweise das dem Klemmhebel zugeordnete Rückstellmittel, insbesondere eine Feder, den Klemmhebel im das Klammermaul schließenden Sinn vorspannt. Dadurch, dass die Schwenkachse des Klemmhebels parallel zur Transportbahn ausgerichtet ist, lässt sich die Transportklammer bequem seitlich bzw. quer zur Transportbahn bestücken. Bevorzugt sieht es die vorliegende Erfindung weiter vor, dass die Schwenkachse des Klemmhebels oberhalb und versetzt zu einem Eingabebereich bzw. einem offenen Ende des Klammermauls im Klammerkörper angeordnet, integriert ist.

Gegebenenfalls ist es vorgesehen, dass der Klammerkörper einteilig ausgebildet ist und Aufnahmen, insbesondere Vertiefungen und/oder Ausschnitte zur Befestigung von Anbauteilen, vorzugsweise Haken, Klemmorganen oder Informationsträger aufweist. Durch die einteilige Ausgestaltung des Klammerkörpers ist dieser einfach und somit kostensparend herstellbar. Des Weiteren weist der Klammerkörper durch seine einteilige Bauweise sowie zusätzlichen Verstärkungen eine erhöhte Stabilität auf. Mögliche Vertiefungen und/oder Ausschnitte im Klammerkörper dienen beispielsweise der Aufnahme weiterer Anbauteile. So ist es insbesondere vorgesehen, dass für den Haken zum Aufhängen auf einer Transportbahn der Klammerkörper eine dem Endbereich des Hakens entsprechende Vertiefung aufweist, in die der Endbereich des Hakens gegebenenfalls ohne ein Arretiermittel festsetzbar ist. Durch dieses Festsetzen wird der Haken gegen ein ungewolltes Lösen und/oder Verdrehung gesichert. Gleichermaßen kann das Klemmorgan, welches den Klemmhebel und das Klammermaul aufweist, als einzelnes Bauteil den Klammerkörper zugeordnet werden. Durch eine derartige modulare Bauweise ist der Klammerkörper flexibel einsetzbar und kann, je nach Anforderungen, mit beispielsweise Haken verschiedener Ausführungsform, insbesondere Länge, verbunden werden, sowie mit unterschiedlich ausgebildeten Klemmorganen.

Des Weiteren kann es vorgesehen sein, dass dem Klammerkörper ein berührungslos auslesbarer Informationsträger, insbesondere ein elektronischer Datenträger bzw. Datenspeicher zuordbar ist, insbesondere der Datenspeicher fest oder lösbar in den Klammerkörper integrierbar und/oder mit dem Klammerkörper verbindbar ist. So kann es vorgesehen sein, dass der Klammerkörper eine Vertiefung mit Arretiervorsprüngen aufweist, in die der Informationsträger bzw. Datenspeicher hineindrückbar und somit rastend gehalten ist. Durch entsprechende Gegenkraft, kann der Datenträger wieder von dem Klammerkörper entfernt werden. Somit lässt sich jeder Klammerkörper individuell mit verschiedensten Informationsträgern ausstatten, und diese, je nach Anforderungen, in den Klammerkörper integrieren. So sind beispielsweise bei Klammerkörpern, die in einer sehr feuchten und/oder heißen Umgebung eingesetzt werden, die Datenspeicher oder - träger derart in den Klammerkörper integriert, dass sie vor äußeren Einflüssen geschützt sind. Dadurch, dass die Klammerkörper üblicherweise aus Kunststoff hergestellt werden, wird das Auslesen bzw. Übertragen von Daten auf den Datenspeicher durch eine derartige Umhüllung nicht beeinträchtigt.

Ein bevorzugtes Ausführungsbeispiel der Erfindung wir nachfolgend anhand der Zeichnung näher erläutert. In dieser zeigen:
- Fig. 1: eine perspektivische Ansicht einer Transportklammer,
- Fig. 2: eine Ansicht einer Seite der Transportklammer,
- Fig. 3: eine Ansicht einer gegenüberliegenden Seite der Transportklammer,
- Fig. 4: eine Ansicht einer Querseite der Transportklammer, und
- Fig. 5: eine schematisierte Darstellung eines Gegenhalters mit der Transportklammer.

Ein Ausführungsbeispiel der Transportklammer 10 ist in den Figuren dargestellt. Es sei an dieser Stelle darauf hingewiesen, dass sich die Transportklammer 10 nicht auf das dargestellte Ausführungsbeispiel beschränkt.

Transportklammern 10 dienen in vorzugsweise gewerblichen Wäschereien dazu, Wäschestücke zu, durch und/oder aus einer Sortier- bzw. Bearbeitungsstation oder in sonstiger Weise durch Wäschereien zu transportieren. Dazu sind die Transportklammern 10 oftmals einem Transportsystem bzw. Transportbahnen mit Transportsträngen z. B. stationären Schienen zugeordnet, entlang derer die Transportklammern 10 transportiert werden. Somit müssen derartige Transportklammern 10 sowohl ein Mittel zur Aufhängung auf oder an dem Transportstrang sowie mindestens ein Mittel zur Aufnahme eines Wäschestücks aufweisen.

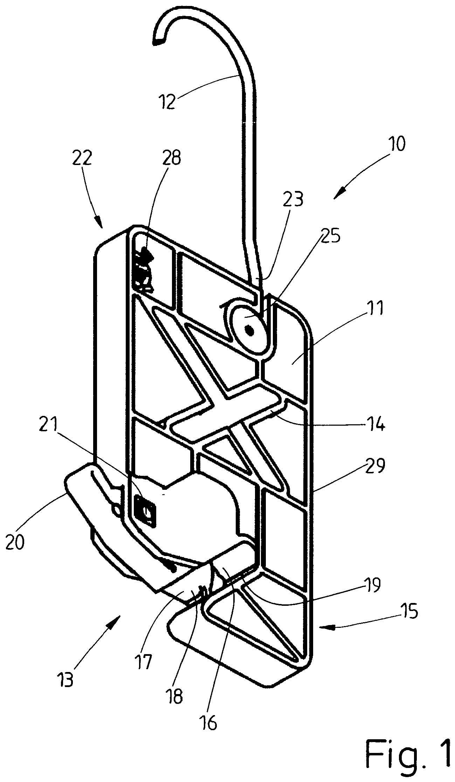

Das in der Fig. 1 dargestellte Ausführungsbeispiel der Transportklammer 10 weist einen Klammerkörper 11 auf, dem ein Haken 12 und ein Klammerorgan 13 zugeordnet ist. Der Klammerkörper 11 ist einstückig ausgebildet und weist in dem hier dargestellten Ausführungsbeispiel die Gestalt eines flachen Quaders auf. Zur Stabilisierung des Klammerkörpers 11 weist dieser Verstärkungen 14 auf, die sich über den Klemmkörper 11 erstrecken. Dabei ist die Form und Gestalt der Verstärkungen 14 nicht auf das dargestellte Ausführungsbeispiel beschränkt.

Einem unteren Bereich 15 des Klammerkörpers 11 ist ein schlitzförmiges Klammermaul 16 zugeordnet. Das Klammermaul 16 erstreckt sich schräg als nut- bzw. kerbenartige Ausnehmung in den Klammerkörper 11 hinein. Es ist jedoch auch denkbar, dass das Klammermaul 16 anders ausgebildet ist bzw. sich unter einem anderen Winkel in den Klammerkörper 11 hinein erstreckt. Dem Klammermaul 16 ist das Klemmorgan 13 zugeordnet. Das Klemmorgan 13 ist als separates Bauteil ausgebildet, das im Klammerkörper 11 integriert, vorzugsweise durch schwenkbare Lagerung im Klammerkörper 11. Das Klammerorgan 13 weist einen Klemmhebel 17 auf, der sich in das Klammermaul 16 hinein erstreckt und mit einer Klemmnase 18 eine Innenfläche 19 des Klammermauls 16 berührt, wenn das Klemmorgan 13 leer ist.

Dem Klemmhebel 17 ist des Weiteren der Klemmnase 18 gegenüberliegend ein Betätigungsvorsprung 20 zugeordnet. Der Klemmhebel 17 ist mit einer Schwenkachse 21 mit dem Klammerkörper 11 bewegbar, vorzugsweise schwenkbar, verbunden. Der Schwenkachse 21 und/oder dem Klemmhebel 17 sind ein nicht dargestelltes Rückstellmittel, beispielsweise eine Feder, zugeordnet. Die Feder bewirkt, dass der Klemmhebel 17 mit einer Vorspannung im das Klemmorgan 13 schließenden Sinne beaufschlagt wird. So wird die Klemmnase 18 in einer in der Fig. 1 dargestellten Ausgangsstellung gegen die Innenfläche 19 des Klammermauls 16 gespannt. Zum Öffnen des Klammermauls 16 bzw. zum Hochschwenken der Klammernase 18 zur Freigabe des Klammermauls 16, ist entweder manuell beim Einschieben einer Ecke oder eines Randabschnitts der Wäschestücke der Klemmhebel 17 gegen seine Federvorspannung zu verschwenken oder es ist der Betätigungsvorsprung 20 derart nach unten zu drücken, dass die Vorspannkraft der Feder oder eines anderen Rückstellmittels überwunden wird. Sobald der Betätigungsvorsprung 20 wieder freigegeben wird, bewegt sich der Klemmhebel 17 zurück in seine Ausgangsstellung.

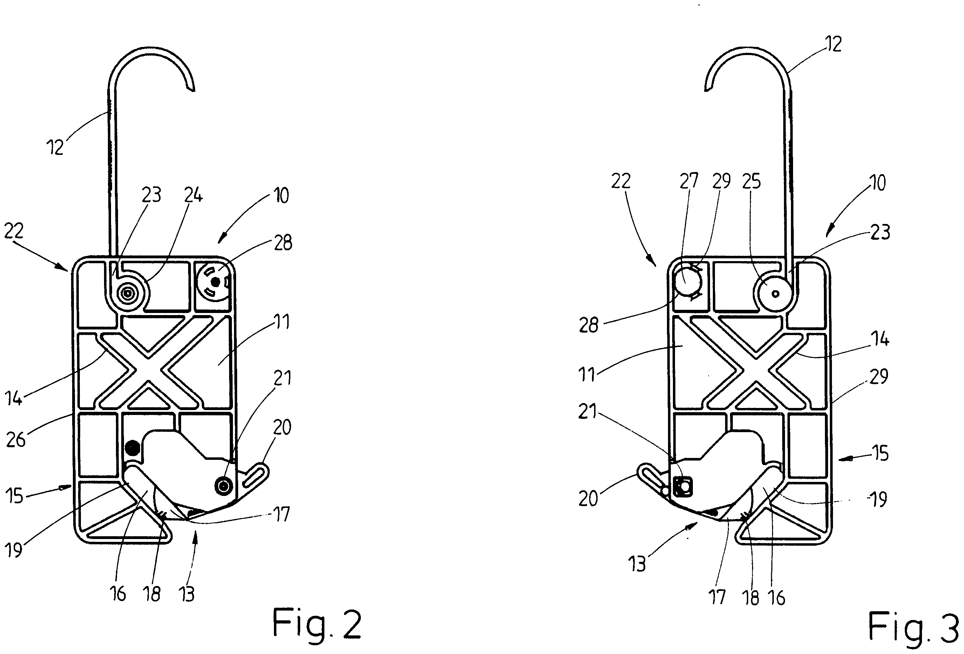

Dem oberen Bereich 22 des Klammerkörpers 11 ist der Haken 12 zugeordnet. Der Haken 12 ist derart ausgebildet, dass er auf eine nicht dargestellte Transportbahn bzw. auf einen nicht dargestellten Transportstrang, beispielsweise eine Schiene, gehängt werden kann. Ein unteres Ende 23 des Hakens 12 ist mit dem Klammerkörper 11 verbunden. Und zwar wird bei der Montage der Transportklammer 10 das ringartige untere Ende 23 des Hakens 12 in eine entsprechende Vertiefung 24 des Klammerkörpers 11 gedrückt und sodann gegebenenfalls durch ein Arretiermittel 25 gesichert (Fig. 2, Fig. 3). Der Haken 12 ist derart mit dem Klammerkörper 19 verbunden, dass er relativ zu demselben unbeweglich, insbesondere unverdrehbar, ist. Die Vertiefung 24 zur Aufnahme des unteren Endes 23 des Hakens 12 ist leicht aus der Mitte des Klammerkörpers 11 versetzt, so dass die Transportklammer 10 im an der Transportbahn hängenden Zustand vertikal nach unten ausgerichtet ist und die Seite 26 des Klammerkörpers 11 senkrecht nach unten weist.

Für eine individuelle Behandlung des aufzunehmenden Wäschestücks ist der Transportklammer 10 ein Datenträger 27 zugeordnet (Fig. 3). Dieser Datenträger 27 ist Berührungslos auslesbar und als Strichcode oder dergleichen oder als elektromagnetischer Datenträger ausgebildet. Zur Aufnahme des Datenträgers 27 weist der Klammerkörper 11 eine Vertiefung 28 auf, die über Rastvorsprünge 29 verfügen kann, zur sicheren Aufnahme des Datenträgers 27 (Fig. 2, Fig. 3). So lässt sich der Datenträger 27 beispielsweise von der in Fig. 3 dargestellten Seite der Transportklammer 10 in die Vertiefung 28 klemmen. Zum Wechseln lässt sich der Datenträger 27 aus der Vertiefung 28 herausdrücken und so von der Transportklammer 10 wieder lösen. Es ist vorgesehen, dass Transportklammern 10, die in einer sehr warmen und/oder feuchten Umgebung eingesetzt werden, eine nicht dargestellte Schutzvorrichtung für den Datenträger 27 aufweisen.

Der Datenträger 27 kann berührungslos ausgelesen, sowie beschrieben werden. So können die Eigenschaften des durch das Klemmorgan 13 gehaltenen Wäschestücks auf dem Datenträger 27 gespeichert werden und das an der Transportklammer 10 hängende Wäschestück so zielgerichtet durch die Wäscherei, vorzugsweise zu den entsprechenden Behandlungseinrichtungen transportiert und/oder sortiert werden.

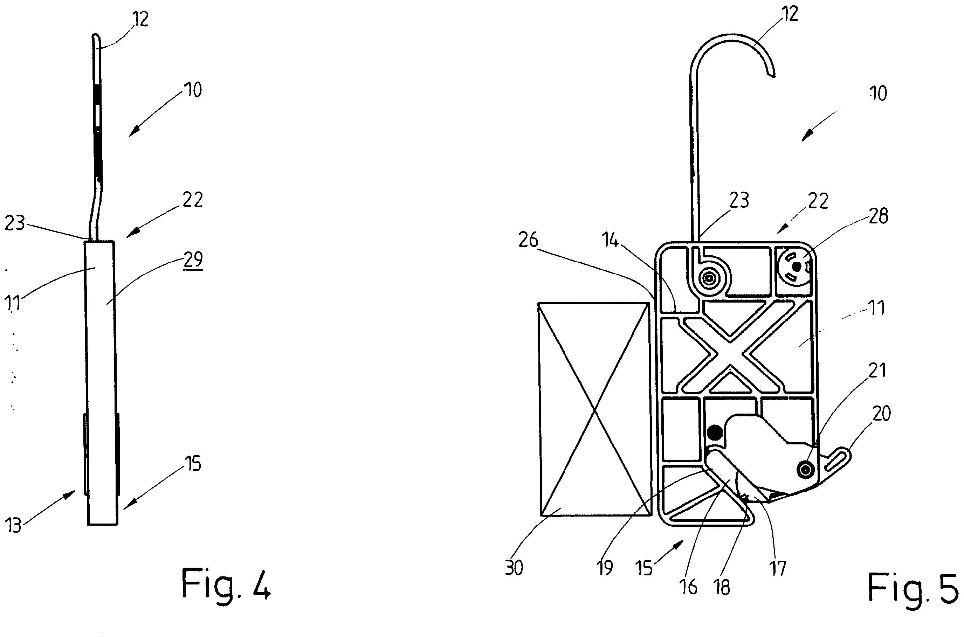

Damit sich die Transportklammer 10 stets in einer vertikalen Ausrichtung befindet, weist der Haken 12 eine leichte Krümmung auf (Fig. 4).

Zum Öffnen der Transportklammer 10 ist eine Kraft gegen die Vorspannung des Rückstellmittels auf den aus dem Klammerkörper 11 seitlich heraushängenden Betätigungsvorsprung 20 des Klammerhebels 17 auszuüben. Dies kann manuell oder durch ein nicht dargestelltes Betätigungsmittel erfolgen. Durch das Betätigen, insbesondere Herunterdrücken, des Betätigungsvorsprungs 20 würde infolge der Federvorspannung desselben die Transportklammer 10 seitlich ausgelenkt, was die Eingabe des Wäschestücks in das Klammermaul 16 erschweren würde. Um eine derartige durch die Betätigung des Betätigungsvorsprungs 20 verursachte seitliche Auslenkung der Transportklammer 10 zu unterbinden, wird der Transportklammer 10 zumindest beim Öffnen und/oder Schließen des Klammermauls 16, als zum Verschwenken des federvorgespannten Betätigungsvorsprungs 20, ein in Fig. 5 schematisch dargestellter Gegenhalter 30 zugeordnet. Dabei wird der Gegenhalter 30 direkt mit der Seite 26 des Klammerkörpers 11 der Transportklammer 10 in Verbindung gebracht, oder geringfügig von der Seite 26 beabstandet, die dem Betätigungsvorsprung 20 gegenüberliegt. Sobald nun der Betätigungsvorsprung 20 z. B nach unten gedrückt wird, stützt sich die Transportklammer 10 mit der Seite 26 am Gegenhalter 30 ab. Ein Auslenken bzw. Ausschwenken der Transportklammer 10 wird somit ganz oder zumindest größtenteils unterbunden.

Der Gegenhalter 30 ist den Transportklammern 10 nur an den Stationen zum Öffnen und/oder Schließen der Transportklammer 10 zugeordnet. Erfindungsgemäß ist es vorgesehen, dass der Gegenhalter 30 stationär der betreffenden Station zugeordnet ist. Der Gegenhalter 30 entspricht in seiner Breite gerade der Breite der Transportklammer 10. Es ist jedoch auch denkbar, dass der Gegenhalter 30 derart ausgebildet ist, dass er für mehrere Transportklammern 10 gleichzeitig als Gegenhalter fungieren kann.

### Bezugszeichenliste:

- 10: Transportklammer
- 11: Klammerkörper
- 12: Haken
- 13: Klammerorgan
- 14: Verstärkung
- 15: unterer Bereich
- 16: Klammermaul
- 17: Klemmhebel
- 18: Klemmnase
- 19: Innenfläche
- 20: Betätigungsvorsprung
- 21: Schwenkachse
- 22: oberer Bereich
- 23: unteres Ende
- 24: Vertiefung
- 25: Arretiermittel
- 26: Seite
- 27: Datenträger
- 28: Vertiefung
- 29: Rastvorsprung
- 30: Gegenhalter

## Patentansprüche

1. Verfahren zum Betätigen einer Transportklammer (10) zum Transport von Wäschestücken in Wäschereien, wobei zum Öffnen eines Klemmorgans (13) ein Betätigungsmittel von außen auf das Klemmorgan (13) einwirkt, **dadurch gekennzeichnet, dass** die Transportklammer (10) beim Öffnen und/oder Schließen an mindestens einem stationären Gegenhalter (30) abgestützt wird.

2. Verfahren nach Anspruch 1, **dadurch gekennzeichnet, dass** das Abstützen nur in einer Station zum Öffnen und/oder Schließen des Klemmorgans (13) erfolgt.

3. Verfahren nach Anspruch 1 oder 2, **dadurch gekennzeichnet, dass** zum Öffnen und/oder Schließen das Betätigungsmittel eines als Klemmhebel (17) ausgebildeten Klemmorgans (13) nach unten bzw. nach oben bewegt wird und dabei die auslenkende Transportklammer (10) durch mindestens einen Gegenhalter (30) gegen ein seitliches Wegschwenken abgestützt wird, insbesondere quer zur Transportrichtung der Transportklammer (10) abgestützt wird.

4. Verfahren nach einem der vorhergehenden Ansprüche, **dadurch gekennzeichnet, dass** ein Wäschestück entgegen einer Vorspannkraft des Klemmhebels (17) in ein Klammermaul (16) des Klemmorgans (13) bewegt wird und dabei die auslenkende Transportklammer (10) durch den Gegenhalter (30) gegen ein seitliches Wegschwenken abgestützt wird.

5. Verfahren nach einem der vorhergehenden Ansprüche, **dadurch gekennzeichnet, dass** ein der Transportklammer (10) zugeordneter Informationsträger berührungslos ausgelesen wird und in Abhängigkeit der ausgelesenen Informationen die Transportklammer (10) geöffnet bzw. geschlossen wird.

6. Transporteinrichtung für ein Klemmorgan (13) aufweisende Transportklammern (10), mit einer ortsunveränderlichen, schienenartigen Transportbahn, auf der die Transportklammern (10) mit denselben zugeordnete Haken (12) aufhängbar sind, gegebenenfalls einem längs mindestens eines Teils der Transportbahn bewegbaren Transportstrang zum Entlangschieben der Transportklammern (10) auf der Transportbahn und mit Stationen zum Öffnen und/oder Schließen von Klemmorganen (13) der Transportklammern (10), **dadurch gekennzeichnet, dass** mindestens den Stationen zum Öffnen und/oder Schließen der Klemmorgane (13) als stationäre Gegenhalter (30) ausgebildete Anschläge zum Abstützen der Transportklammern (10) zugeordnet sind.

## Claims

1. Method for actuating a transporting clamp (10) for transporting items of laundry in laundries, wherein, for the purpose of opening a clamping member (13) an actuating means acts on the clamping member (13) from the outside, **characterized in that** the transporting clamp (10) is supported on at least one stationary abutment (30) during the opening operation and/or closing operation.

2. Method according to Claim 1, **characterized in that** support is provided only in a station for opening and/or closing the clamping member (13).

3. Method according to Claim 1 or 2, **characterized in that**, for opening and/or closing purposes, the actuating means of a clamping member (13), which is designed in the form of a clamping lever (17), is moved downwards and/or upwards and, in the process, the deflecting transporting clamp (10) is supported by at least one abutment (30) such that it does not pivot away laterally, in particular it is transported in a direction transverse to the transporting direction of the transporting clamp (10).

4. Method according to one of the preceding claims, **characterized in that** an item of laundry is moved into a clamp mouth (16) of the clamping member (13) counter to a prestressing force of the clamping lever (17) and, in the process, the deflecting transporting clamp (10) is supported by the abutment (30) so that it does not pivot away laterally.

5. Method according to one of the preceding claims, **characterized in that** an information carrier assigned to the transporting clamp (10) is read out in a contactless manner and, in dependence on the information read out, the transporting clamp (10) is opened or closed.

6. Transporting apparatus for transporting clamps (10) which have a clamping member (13), comprising a fixed-location, rail-like transporting track, on which the transporting clamps (10) can be hung by way of hooks (12) assigned to the same, possibly comprising a transporting line, which can be moved along at least part of the transporting track and is intended for pushing the transporting clamps (10) along the transporting track, and also comprising stations for opening and/or closing clamping members (13) of the transporting clamps (10), **characterized in that** at least the stations for opening and/or closing the clamping members (13) are assigned stops which are designed in the form of stationary abutments (30) and are intended for supporting the transporting clamps (10).

## Revendications

1. Procédé permettant d'actionner une pince de transport (10) destinée au transport de pièces de linge dans des blanchisseries, dans lequel, pour l'ouverture d'un élément de serrage (13), un moyen d'actionnement agit de l'extérieur sur l'élément de serrage (13), **caractérisé en ce que** la pince de transport (10) est supportée sur au moins un contre-support stationnaire (30) lors de l'ouverture et/ou de la fermeture.

2. Procédé selon la revendication 1, **caractérisé en ce que** le support n'est effectué qu'à un poste pour ouvrir et/ou fermer l'élément de serrage (13).

3. Procédé selon la revendication 1 ou 2, **caractérisé en ce que** pour l'ouverture et/ou la fermeture, le moyen d'actionnement d'un élément de serrage (13) réalisé sous forme de levier de serrage (17) est déplacé vers le bas ou vers le haut, et la pince de transport (10) qui dévie est alors supportée par au moins un contre-support (30) pour éviter tout pivotement latéral, en particulier supportée transversalement à la direction de transport de la pince de transport (10).

4. Procédé selon l'une quelconque des revendications précédentes, **caractérisé en ce qu'**une pièce de linge est déplacée contre une force de précontrainte du levier de serrage (17) dans une mâchoire de pince (16) de l'élément de serrage (13), et la pince de transport (10) qui dévie est supportée par le contre-support (30) pour éviter tout pivotement latéral.

5. Procédé selon l'une quelconque des revendications précédentes, **caractérisé en ce qu'**un support d'informations associé à la pince de transport (10) est lu sans contact, et la pince de transport (10) est ouverte ou fermée en fonction des informations lues.

6. Dispositif de transport pour des pinces de transport (10) présentant un élément de serrage (13), comprenant une voie de transport en forme de rail à laquelle les pinces de transport (10) peuvent être accrochées par des crochets (12) associés à celles-ci, le cas échéant un tronçon de transport mobile le long d'au moins une partie de la voie de transport afin de faire avancer les pinces de transport (10) sur la voie de transport, et des postes pour ouvrir et/ou fermer des éléments de serrage (13) des pinces de transport (10), **caractérisé en ce que** des butées, réalisées sous forme de contre-supports stationnaires (30), pour supporter les pinces de transport (10) sont associées au moins aux postes pour ouvrir et/ou fermer les éléments de serrage (13).
